(19) Europäisches Patentamt / European Patent Office / Office européen des brevets

(11) **EP 3 564 634 B1**

(12) **FASCICULE DE BREVET EUROPEEN**

(45) Date de publication et mention de la délivrance du brevet:
**17.02.2021 Bulletin 2021/07**

(51) Int Cl.:
*G01J 3/18* *(2006.01)*     *G02B 27/00* *(2006.01)*
*G01J 3/02* *(2006.01)*

(21) Numéro de dépôt: **19169729.1**

(22) Date de dépôt: **17.04.2019**

(54) **PROCEDE D'INSENSIBILISATION A LA DEFOCALISATION PAR MASQUE DE PHASE D'UN SPECTROMETRE POUR INSTRUMENTS D'OBSERVATION EMBARQUES**

VERFAHREN ZUM INSENSIBILISIEREN GEGENÜBER DER DEFOKALISIERUNG DURCH DIE PHASENMASKE EINES SPEKTROMETERS FÜR EINGEBAUTES BEOBACHTUNGSSYSTEM

METHOD FOR DESENSITISATION OF A SPECTROMETER TO DEFOCUSING BY PHASE MASK FOR BUILT-IN OBSERVATION INSTRUMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.05.2018 FR 1800425**

(43) Date de publication de la demande:
**06.11.2019 Bulletin 2019/45**

(73) Titulaire: **Thales**
**92400 Courbevoie (FR)**

(72) Inventeurs:
• **CARLAVAN, Mikael**
**06150 CANNES LA BOCCA (FR)**
• **PAUL, Baptiste**
**06150 CANNES LA BOCCA (FR)**

• **SERRE, Denis**
**06150 CANNES LA BOCCA (FR)**

(74) Mandataire: **Marks & Clerk France**
**Immeuble "Visium"**
**22, avenue Aristide Briand**
**94117 Arcueil Cedex (FR)**

(56) Documents cités:
**FR-A1- 2 923 028**     **US-A1- 2012 307 133**
**US-A1- 2017 322 077**

• **Frédéric Diaz: "Systeme d'imagerie hybride par codage de pupille", , 6 mai 2011 (2011-05-06), XP055213287, Extrait de l'Internet: URL:http://tel.archives-ouvertes.fr/tel-00 624387/en/**

**EP 3 564 634 B1**

**Description**

Le domaine de l'invention est celui de la spectrométrie et, tout particulièrement, celui de la spectrométrie embarquée sur satellite, permettant notamment de réaliser de l'analyse spectrale de la terre depuis l'orbite terrestre.

La qualité d'un instrument comportant un spectromètre optique est caractérisée en particulier par une fonction dite « ISRF », acronyme de « Instrument Spectral Response Function » qui représente la réponse de l'instrument en fonction de la longueur d'onde. Lorsque cet instrument est embarqué sur un satellite et qu'il est soumis à l'environnement spatial, il est nécessaire de limiter toute évolution de son ISRF de façon à conserver une réponse stable de l'instrument.

La stabilité de l'ISRF est à ce jour assurée en limitant autant que possible l'apparition de perturbateurs ayant un impact sur cette dernière. On citera, notamment, comme principal perturbateur, la défocalisation ou « défocus ». Ce dernier, caractérisé par un décalage d'un ou de plusieurs éléments optiques de l'instrument ou encore du détecteur le long de l'axe optique, a un impact substantiel sur la forme de l'ISRF. Cette défocalisation peut, par exemple, être le fait de déformations mécaniques ou de variations thermiques.

Aussi, les spectromètres sont aujourd'hui conçus avec des contraintes optiques, mécaniques et thermiques fortes de manière à assurer la stabilité des différents éléments de la chaine optique, permettant ainsi de maintenir dans l'instrument une variation de défauts optiques faible, induisant une déformation de l'ISRF compatible des spécifications techniques.

Cette stabilité est obtenue au prix de contraintes spécifiques fortes sur le design de l'instrument et qui ne sont pas sans conséquences sur la complexité de ce dernier. La structure mécanique soutenant la chaine optique doit ainsi être suffisamment stable pour garantir la performance requise. Par ailleurs, les variations thermiques de l'ensemble doivent être particulièrement bien maîtrisées pour assurer un niveau de stabilité suffisant au niveau de l'instrument. De telles contraintes impliquent la mise en place de stratégies de régulations thermiques potentiellement couteuses et contraignantes dans la conception et la réalisation de l'instrument.

Contrairement aux approches techniques de l'art antérieur qui reposent sur la limitation de la quantité de défocus présente dans le spectromètre, la solution technique selon l'invention consiste à rechercher la forme de front d'onde ou « WFE », acronyme de « Wave Front Error » qui, une fois introduite dans le spectromètre, permet de minimiser, par exemple, sa sensibilité au défocus. Autrement dit, cette nouvelle approche repose sur la recherche de la forme de front d'onde minimisant la déformation de l'ISRF de l'instrument considéré pour différentes amplitudes de défocus. Une fois déterminée, cette forme de front d'onde est introduite dans la pupille du spectromètre, par exemple au moyen d'un masque de phase. Ce procédé peut être appliqué, dans le même but, à d'autres aberrations optiques.

L'augmentation de la tolérance de l'instrument au défocus ou à d'autres aberrations optiques induite par cette modification de l'architecture optique et par l'introduction du masque de phase permet alors d'assouplir les contraintes optiques, mécaniques et thermiques associées à la réalisation de l'instrument. Ce procédé permet donc de simplifier significativement la conception de l'instrument.

Plus précisément, l'invention a pour objet un procédé de calcul d'une architecture optique d'un instrument d'observation comportant un spectromètre à fente, ledit instrument étant soumis à une perturbation connue modifiant son architecture optique,
ledit spectromètre comportant une fente d'entrée, un système optique, un masque de phase, un réseau de dispersion spectrale et un détecteur matriciel photosensible, le masque de phase étant défini par au moins un paramètre ($\alpha$), le système optique, le masque de phase et le réseau de dispersion spectrale étant agencés de façon que l'image spectralement dispersée de la fente d'entrée soit située dans le plan du détecteur matriciel photosensible,

La résolution optique du spectromètre sans masque de phase étant notée FWHM, la résolution optique du spectromètre avec masque de phase étant notée $\text{FWHM}_M$, un écart maximal ($\varepsilon_{\text{FWHM}}$) est défini tel que, pour tout paramètre ($\alpha$), le masque de phase doit vérifier :

$$\frac{\left| FWHM_M - FWHM \right|}{FWHM} \leq \varepsilon_{FWHM} \text{,}$$

ledit écart maximal restant inférieur à un seuil donne par les spécifications du système.

La résolution minimale en fonction d'une longueur d'onde du spectromètre comportant le masque de phase étant notée $\text{ISRF}_0$ et la résolution dégradée à la même longueur d'onde en fonction de la valeur de la perturbation connue étant notée $\text{ISFR}_t$, l'erreur de forme est évaluée. Elle vaut, pour l'ensemble des valeurs de la perturbation :

$$\varepsilon_{FORME} = Max\left(\frac{|ISRF_t - ISRF_0|}{ISRF_0}\right)$$

Le procédé de calcul comporte alors une étape d'optimisation dans laquelle le minimum de l'erreur de forme ($\varepsilon_{FORME}$) est déterminé en faisant varier le paramètre ($\alpha$), le paramètre ($\alpha_{MIN}$) correspondant à l'optimum de ce problème d'optimisation étant retenu pour l'élaboration du masque de phase.

Avantageusement, la forme de l'ISRF est insensible à la présence d'une défocalisation déterminée de l'image spectralement dispersée de la fente d'entrée dans le plan du détecteur matriciel photosensible.

Avantageusement, le système optique comporte un premier ensemble optique collimatant l'image de la fente à l'infini et un second ensemble optique focalisant l'image de cette source dans le plan du détecteur matriciel photosensible, le réseau de dispersion spectrale étant disposé entre le premier ensemble et le second ensemble.

Avantageusement, le masque de phase s'écrit comme une combinaison linéaire d'un vecteur de paramètres et d'une base polynomiale ou trigonométrique.

Avantageusement, la conception de l'architecture optique de l'instrument d'observation est réalisée suivant un procédé de calcul tel que défini ci-dessus.

L'invention sera mieux comprise et d'autres avantages apparaîtront à la lecture de la description qui va suivre donnée à titre non limitatif et grâce aux figures annexées parmi lesquelles :

La figure 1 représente un instrument d'observation comportant un spectromètre à fente ;
La figure 2 représente l'image dans le plan focal du spectromètre à fente ;
La figure 3 représente les différentes étapes du procédé de calcul d'une architecture optique selon l'invention ;
La figure 4 représente la variation de l'erreur de forme dans le plan focal du spectromètre dans le cas où le spectromètre ne comporte pas de masque de phase et dans le cas où le spectromètre comporte un masque de phase optimisé selon l'invention.

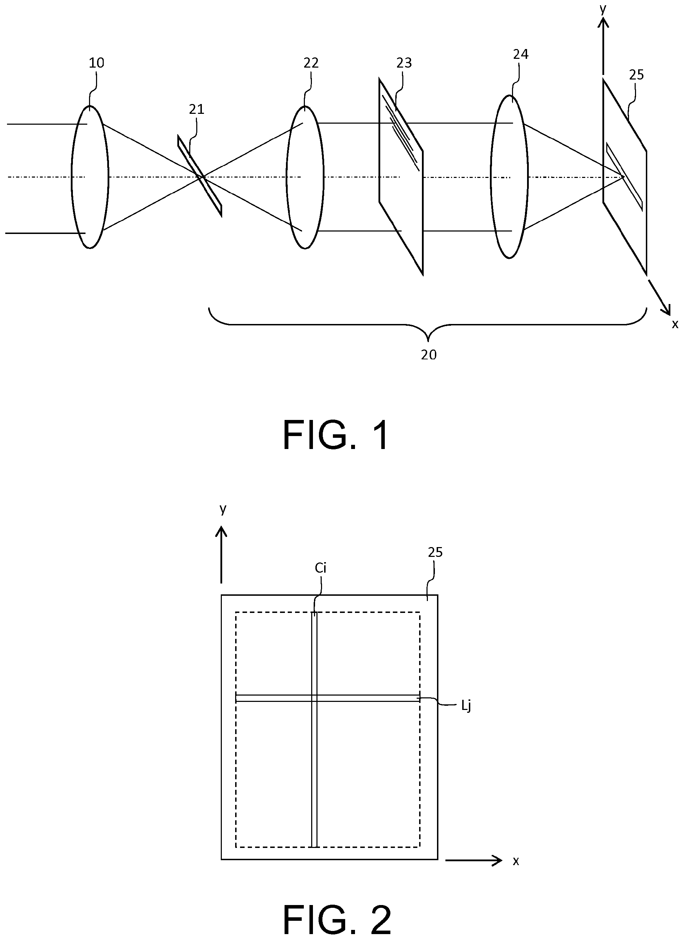

La figure 1 représente le synoptique d'un instrument d'observation selon l'invention. Sur cette figure, les composants sont représentés en traits gras, la propagation des rayons lumineux en traits fins. L'instrument comporte deux parties principales. La partie avant est un télescope symbolisé par l'optique 10. La partie arrière est un spectromètre 20. Cet instrument est destiné à être embarqué à bord d'un satellite. Plus généralement, il peut fonctionner à bord de tout porteur mobile.

Généralement, le télescope 10 comporte plusieurs miroirs. Ce type d'architecture optique est bien connu de l'homme du métier. L'image en provenance de la terre est focalisée par le télescope dans un plan focal intermédiaire contenant une fente 21, qui, projetée sur la surface terrestre, permet de délimiter la zone dont on souhaite mesurer le spectre. Cette fente, délimitant la zone de la Terre observée, est ré-imagée par le spectromètre 20. Ce dernier est constitué d'un collimateur 22 permettant d'envoyer l'image de la fente après collimation vers un réseau de dispersion 23 qui disperse les différentes longueurs d'ondes de la bande spectrale considérée dans différentes directions qui sont ensuite focalisés par un imageur 24 sur le photo-détecteur 25 du spectromètre. Là encore, la réalisation du collimateur 22, du réseau de dispersion 23, de l'imageur 24 et du détecteur 25 sont bien connus de l'homme du métier. Généralement, les optiques choisies sont de type catadioptrique.

Le photo-détecteur 25 est disposé dans un plan (x, y). Il comporte une matrice composée de colonnes Ci de lignes Lj de photorécepteurs comme on le voit sur la figure 2. La dispersion du réseau se fait selon l'axe y correspondant aux lignes Lj du détecteur. Chaque longueur d'onde $\lambda_j$, est donc associée à une position particulière sur les lignes Lj du détecteur 25. L'image de la fente est réalisée selon l'axe y du détecteur. Par conséquent, chaque ligne Lj correspond à une image de la fente à une longueur $\lambda_j$ connue, chaque colonne Ci correspond à la décomposition spectrale d'un point de l'image sur une bande spectrale qui dépend des propriétés de dispersion du réseau et de son implémentation.

Comme il a été dit, la performance d'un spectromètre est, entre autres, quantifiée par son ISRF, qui représente la réponse de l'instrument à une longueur d'onde donnée. La déformation de cette dernière est l'objet de plusieurs spécifications liées à sa stabilité, dont l'une porte sur l'erreur de forme $\varepsilon_{forme}$ définie comme suit :

$$\varepsilon_{forme} = \max\left(\frac{|ISRF_t - ISRF_0|}{ISRF_0}\right),$$

où $ISRF_t$ représente l'ISRF de l'instrument à tout instant t de la vie du spectromètre et $ISRF_0$ représente la forme connue, par calibration, par exemple de l'ISRF. La performance des spectromètres est ainsi garantie par un niveau de variation maximum de cette erreur. Une telle spécification pose des contraintes sur la variation des aberrations, la principale étant la défocalisation ou défocus durant la vie du spectromètre, qui ont un effet direct sur la forme de ISRF$_t$ et donc sur l'erreur de forme. Ces aberrations doivent rester à un niveau suffisamment faible pour que la variation de la forme de ISRF$_t$ reste compatible d'un niveau de variation toléré.

Dans le procédé selon l'invention, l'architecture optique du spectromètre comporte un masque de phase. Ce masque de phase introduit une variation particulière dans la pupille du spectromètre de la forme du front d'onde ou « WFE », acronyme de « Wave Front Error ».

Celui-ci est disposé au voisinage de la pupille du spectromètre. Il existe différentes techniques pour réaliser ce type de masque. Elles sont connues de l'homme du métier.

La méthode consistant à introduire une WFE dans la pupille est appelée codage de front d'onde ou en anglais « wavefront coding » et a été initialement publiée dans une publication de Edward R. Dowski and W. Thomas Cathey intitulée "Extended depth of field through wave-front coding," Appl. Opt. 34, 1859-1866 (1995). Cette technique a néanmoins été proposée initialement pour de l'imagerie et nécessite l'ajout d'un post-traitement numérique afin de réduire l'impact de la WFE du masque inséré, qui dégrade fortement la qualité image en sortie d'instrument. A titre d'exemples, ce problème est traité dans les brevets US 5 748 371 intitulé "Extended depth of field optical systems" - US 6 842 297 intitulé "Wavefront coding optics" - FR 2 923 028 intitulé « Dispositif d'imagerie à codage de pupille sub-longueur d'onde ». Ce point est également abordé dans les publications suivantes W. Langeveld (SLAC) intitulée "Possible Application of Wavefront Coding to the LSST", Jun 2006. 6 pp. SLAC-TN-05-052 et M. Roche, « Introduction to Wavefront Coding for Inchorent Imaging », New Concepts in Imaging: Optical and Statistical Models, D. Mary, C. Theys and C. Aime (eds), EAS Publications Series, 59, 2013.

La géométrie des masques de phase peut être plus ou moins complexe selon l'erreur de phase souhaitée. Dans tous les cas, le masque de phase dépend au moins d'un paramètre $\alpha$ qui peut être, par exemple, la variation maximale de phase sur l'ensemble du masque. Le paramètre $\alpha$ peut également être un paramètre géométrique. A titre d'exemples, le profil de phase peut être de type cubique ou « CPP » pour « Constant profil Path » ou trigonométrique ou annulaire ou polynomial. Les masques annulaires sont composés d'anneaux concentriques, chaque anneau introduisant une phase constante et différente selon l'anneau. Les masques polynomiaux sont référencés dans un repère (x, y), la variation de phase du filtre de phase est un polynôme en x et en y. Lorsque le masque est à symétrie radiale, la variation de phase du filtre de phase est un polynôme en r, r représentant la distance au centre du filtre.

La résolution spectrale d'un spectromètre est définie par sa « FWHM », acronyme de « Full Width at Half Maximum ». Pour les instruments d'observation comportant un spectromètre à fente, une image de très bonne qualité n'est pas un prérequis dans la mesure où une des limitations de la résolution est liée à la largeur de la fente d'entrée qui ne peut pas être infiniment étroite. Par conséquent, l'introduction d'un masque de phase ne nécessite pas un post-traitement numérique dédié à restaurer la qualité image dégradée par son introduction. C'est un avantage essentiel du procédé selon l'invention.

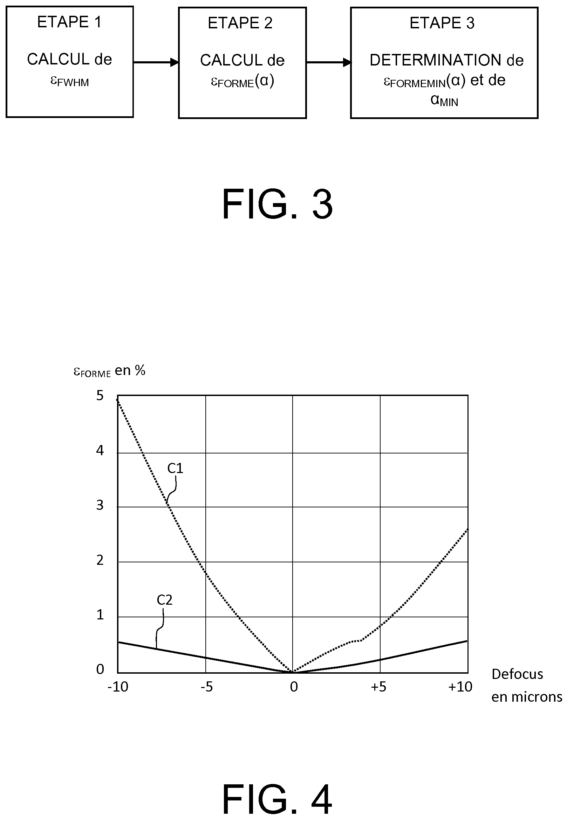

Le procédé selon l'invention est représenté sur la figure 3. Pour des raisons de clarté, le procédé est décrit avec un masque de phase dépendant d'un seul paramètre a. Il se généralise facilement à plusieurs paramètres.

La résolution optique du spectromètre sans masque de phase étant notée FWHM, la résolution optique du spectromètre avec masque de phase étant noté FWHM$_M$, un écart maximal $\varepsilon_{FWHM}$ est défini tel que, pour tout paramètre a, le masque de phase doit vérifier :

$$\frac{\left| FWHM_M - FWHM \right|}{FWHM} \leq \varepsilon_{FWHM}$$

Ainsi, on s'assure que le masque de phase n'introduit pas de variations importantes, incompatibles des autres spécifications de l'instrument.

La résolution minimale en fonction d'une longueur d'onde du spectromètre comportant le masque de phase étant notée ISRF$_0$ et la résolution dégradée à la même longueur d'onde en fonction de la valeur de la perturbation connue étant notée ISFR$_t$, l'erreur de forme est définie par :

$$\varepsilon_{FORME}(\alpha) = Max\left( \frac{\left| ISRF_t - ISRF_0 \right|}{ISRF_0} \right)$$

Dans une étape d'optimisation, on calcule le minimum de l'erreur de forme $\varepsilon_{FORME}$ en faisant varier le paramètre a, sous la contrainte que l'écart maximal $\varepsilon_{FWHM}$ reste inférieur à un seuil donné par les spécifications du système. Le paramètre $\alpha_{MIN}$ correspondant à l'optimum de ce problème d'optimisation est retenu pour l'élaboration du masque de phase.

Les paramètres calculés à l'issue de cette dernière étape définissent alors la WFE permettant de rendre l'instrument insensible à la plage de variation des aberrations considérées. L'introduction de cette WFE dans le spectromètre est réalisée en insérant dans la chaine optique de ce dernier une ou plusieurs surfaces spécifiquement conçues pour permettre d'introduire dans la pupille du système optique le profil du masque de phase déterminé à l'issue du processus d'optimisation. Une telle opération peut par exemple être réalisée en modifiant la surface sur laquelle est inscrit le réseau situé dans un plan pupille.

A titre d'exemple, la figure 4 représente l'erreur de forme en pourcentage en fonction de la défocalisation exprimée en microns pour un système optique de spectromètre. La courbe C1 en pointillés représente l'erreur de forme en l'absence de masque de phase et la courbe C2 en trait plein l'erreur de forme en présence d'un masque de phase optimisé selon le procédé selon l'invention. Comme on le voit, l'erreur de forme devient dans ce cas beaucoup moins sensible au défaut de focalisation. Le gain est, pour une défocalisation maximale de 10 microns, d'un facteur 10.

L'avantage principal du procédé selon l'invention est qu'il permet de minimiser les modifications de la chaine optique du spectromètre, les principaux composants optiques du spectromètre n'étant pas modifiés.

## Revendications

1. Procédé de calcul d'une architecture optique d'un instrument d'observation comportant un spectromètre (20) à fente (21), ledit instrument étant soumis à une perturbation connue modifiant son architecture optique,
   ledit spectromètre comportant une fente d'entrée (21), un système optique (22, 24), un masque de phase, un réseau de dispersion spectrale (23) et un détecteur matriciel photosensible (24), le masque de phase étant défini par au moins un paramètre ($\alpha$), le système optique, le masque de phase et le réseau de dispersion spectrale étant agencés de façon que l'image spectralement dispersée de la fente d'entrée soit située dans le plan du détecteur matriciel photosensible,
   La résolution spectrale du spectromètre sans masque de phase étant notée FWHM, la résolution optique du spectromètre avec masque de phase étant notée $FWHM_M$, un écart maximal ($\varepsilon_{FWHM}$) étant défini tel que, pour tout paramètre ($\alpha$), le masque de phase vérifiant :

$$\frac{\left|FWHM_M - FWHM\right|}{FWHM} \leq \varepsilon_{FWHM}$$

Ledit écart maximal ($\varepsilon_{FWHM}$) restant inférieur à un seuil donné par les spécifications du système,
   la réponse spectrale de l'instrument comportant le masque de phase étant notée $ISRF_0$ et la réponse spectrale à la même longueur d'onde en fonction de la valeur de la perturbation connue étant notée $ISFR_t$, l'erreur de forme valant, pour l'ensemble des valeurs de la perturbation :

$$\varepsilon_{FORME} = Max\left(\frac{\left|ISRF_t - ISRF_0\right|}{ISRF_0}\right)$$

**caractérisé en ce que**, l'erreur de forme dépendant du paramètre ($\alpha$), le procédé de calcul comporte une étape d'optimisation dans laquelle le minimum de l'erreur de forme ($\varepsilon_{FORME}$) est déterminé en faisant varier le paramètre ($\alpha$), le paramètre $\alpha_{MIN}$) correspondant à ce minimum de l'erreur de forme étant retenu pour l'élaboration du masque de phase.

2. Procédé de calcul d'une architecture optique d'un instrument d'observation comportant un spectromètre à fente selon la revendication 1, **caractérisé en ce que** la forme de l'ISRF est insensible à une défocalisation déterminée de l'image spectralement dispersée de la fente d'entrée dans le plan du détecteur matriciel photosensible.

3. Procédé de calcul d'une architecture optique d'un instrument d'observation comportant un spectromètre à fente selon l'une des revendications précédentes, **caractérisé en ce que** le système optique comporte un premier ensemble optique (22) collimatant l'image de la fente (21) à l'infini et un second ensemble optique (24) focalisant l'image de cette source dans le plan du détecteur matriciel photosensible, le réseau de dispersion spectrale (23) étant disposé entre le premier ensemble optique et le second ensemble optique.

4. Procédé de calcul d'une architecture optique d'un instrument d'observation comportant un spectromètre à fente selon l'une des revendications précédentes, **caractérisé en ce que** le masque de phase est cubique ou polynomial.

5. Instrument d'observation comportant un spectromètre à fente destiné à être embarqué sur satellite, **caractérisé en ce que** la conception de l'architecture optique de l'instrument est réalisée suivant un procédé de calcul selon l'une des revendications précédentes.

**Patentansprüche**

1. Verfahren zur Berechnung einer optischen Architektur eines Beobachtungsinstruments, umfassend ein Spektrometer (20) mit einem Schlitz (21), wobei das Instrument einer bekannten Störung ausgesetzt ist, welche seine optische Architektur verändert,
   wobei das Spektrometer einen Eingangsschlitz (21), ein optisches System (22, 24), eine Phasenmaske, ein Netzwerk zur spektralen Zerlegung (23) und einen lichtempfindlichen Matrixdetektor (24) umfasst, wobei die Phasenmaske durch mindestens einen Parameter ($\alpha$) definiert ist, wobei das optische System, die Phasenmaske und das Netzwerk zur spektralen Zerlegung so angeordnet sind, dass das spektral zerlegte Bild des Eingangsschlitzes in der Ebene des lichtempfindlichen Matrixdetektors liegt,
   wobei die spektrale Auflösung des Spektrometers ohne Phasenmaske mit FWHM angegeben wird, die optische Auflösung des Spektrometers mit Phasenmaske mit $FWHM_M$ angegeben wird, ein maximaler Abstand ($\varepsilon_{FWHM}$) so definiert ist, dass, bei jedem Parameter ($\alpha$) die Phasenmaske folgende Beziehung bewahrheitet:

$$\frac{\left| FWHM_M - FWHM \right|}{FWHM} \leq \varepsilon_{FWHM}$$

wobei der maximale Abstand ($\varepsilon_{FWHM}$) unter einem durch die Spezifikationen des Systems vorgegebenen Schwellenwert bleibt,
wobei das spektrale Ansprechen des Instruments, welches die Phasenmaske umfasst, mit $ISRF_0$ angegeben wird und das spektrale Ansprechen bei derselben Wellenlänge angesichts des Wertes der bekannten Störung mit $ISFR_t$ angegeben wird, wobei der Formfehler für sämtliche Störungswerte folgenden Wert aufweist:

$$\varepsilon_{FORM} = Max\left( \frac{\left| ISRF_t - ISRF_0 \right|}{ISRF_0} \right)$$

**dadurch gekennzeichnet, dass**, da der Formfehler vom Parameter ($\alpha$) abhängt, das Berechnungsverfahren einen Schritt der Optimierung umfasst, bei welchem das Minimum des Formfehlers ($\varepsilon_{FORM}$) bestimmt wird, indem man den Parameter ($\alpha$) variiert, wobei der Parameter ($\alpha_{MIN}$), welcher diesem Minimum des Formfehlers entspricht, für die Herstellung der Phasenmaske verwendet wird.

2. Verfahren zur Berechnung einer optischen Architektur eines Beobachtungsinstruments, welches ein Spektrometer mit Schlitz nach Anspruch 1 umfasst, **dadurch gekennzeichnet, dass** die Form des Instruments ISRF unempfindlich für eine bestimmte Defokussierung des spektral zerlegten Bildes des Eingangsschlitzes in der Ebene des lichtempfindlichen Matrixdetektors ist.

3. Verfahren zur Berechnung einer optischen Architektur eines Beobachtungsinstruments, welches ein Spektrometer mit Schlitz nach einem der vorhergehenden Ansprüche umfasst, **dadurch gekennzeichnet, dass** das optische System eine erste optische Gruppe (22) umfasst, welche das Bild des Schlitzes (21) ins Unendliche kollimiert und eine zweite optische Gruppe (24), welche das Bild dieser Quelle in der Ebene des lichtempfindlichen Matrixdetektors fokussiert, wobei das Netzwerk zur spektralen Zerlegung (23) zwischen der ersten optischen Gruppe und der zweiten optischen Gruppe angeordnet ist.

4. Verfahren zur Berechnung einer optischen Architektur eines Beobachtungsinstruments, welches ein Spektrometer mit Schlitz nach einem der vorhergehenden Ansprüche umfasst, **dadurch gekennzeichnet, dass** die Phasenmaske kubisch oder polynomisch ist.

5. Beobachtungsinstrument, welches ein Spektrometer mit Schlitz umfasst, dazu bestimmt, an Bord eines Satelliten mitgeführt zu werden, **dadurch gekennzeichnet, dass** das Design der optischen Architektur des Instruments gemäß einem Berechnungsverfahren nach einem der vorhergehenden Ansprüche ausgeführt wird.

**Claims**

1. A method for computing an optical architecture of an observation instrument comprising a slit (21) spectrometer (20), said instrument being subject to a known disruption modifying its optical architecture,
   said spectrometer comprising an inlet slit (21), an optical system (22, 24), a phase mask, a spectral dispersion array (23) and a light-sensitive matrix detector (24), the phase mask being defined by at least one parameter ($\alpha$), the optical system, the phase mask and the spectral dispersion array being arranged so that the spectrally dispersed image of the inlet slit is located in the plane of the light-sensitive matrix detector,
   the spectral resolution of the spectrometer without a phase mask being denoted FWHM, the optical resolution of the spectrometer with a phase mask being denoted $FWHM_M$, a maximum deviation ($\varepsilon_{FWHM}$) being defined such that, for any parameter ($\alpha$), the phase mask verifies:

$$\frac{\left|FWHM_M - FWHM\right|}{FWHM} \leq \varepsilon_{FWHM}$$

said maximum deviation ($\varepsilon_{FWHM}$) remaining below a threshold provided by the specifications of the system,
   the spectral response of the instrument comprising the phase mask being denoted $ISRF_0$ and the spectral response at the same wavelength as a function of the value of the known disruption being denoted $ISFR_t$, the form error equalling, for all the values of the disruption:

$$\varepsilon_{FORM} = Max\left(\frac{\left|ISRF_t - ISRF_0\right|}{ISRF_0}\right)$$

**characterised in that**, with the form error depending on the parameter ($\alpha$), the computation method comprises an optimisation step, in which the minimum of the form error ($\varepsilon_{FORM}$) is determined by varying the parameter ($\alpha$), the parameter ($\alpha_{MIN}$) corresponding to this minimum of the form error being retained for establishing the phase mask.

2. The method for computing an optical architecture of an observation instrument comprising a slit spectrometer as claimed in claim 1, **characterised in that** the form of the ISRF is insensitive to a determined defocusing of the spectrally dispersed image of the inlet slit in the plane of the light-sensitive matrix detector.

3. The method for computing an optical architecture of an observation instrument comprising a slit spectrometer as claimed in one of the preceding claims, **characterised in that** the optical system comprises a first optical assembly (22) collimating the image of the slit (21) to infinity and a second optical assembly (24) focusing the image of this source in the plane of the light-sensitive matrix detector, the spectral dispersion array (23) being disposed between the first optical assembly and the second optical assembly.

4. The method for computing an optical architecture of an observation instrument comprising a slit spectrometer as claimed in any one of the preceding claims, **characterised in that** the phase mask is cubic or polynomial.

5. An observation instrument comprising a slit spectrometer intended to be placed on board a satellite, **characterised in that** the optical architecture of the instrument is designed in accordance with a computation method as claimed in any one of the preceding claims.

# FIG. 1

# FIG. 2

| ETAPE 1 | | ETAPE 2 | | ETAPE 3 |
|---|---|---|---|---|
| CALCUL de $\varepsilon_{FWHM}$ | → | CALCUL de $\varepsilon_{FORME}(\alpha)$ | → | DETERMINATION de $\varepsilon_{FORMEMIN}(\alpha)$ et de $\alpha_{MIN}$ |

# FIG. 3

$\varepsilon_{FORME}$ en %

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5748371 A
- US 6842297 B
- FR 2923028

**Littérature non-brevet citée dans la description**

- **EDWARD R. DOWSKI ; W. THOMAS CATHEY.** Extended depth of field through wave-front coding. *Appl. Opt.,* 1995, vol. 34, 1859-1866
- **W. LANGEVELD.** *Possible Application of Wavefront Coding to the LSST,* Juin 2006, 6
- Introduction to Wavefront Coding for Inchorent Imaging. **M. ROCHE.** New Concepts in Imaging: Optical and Statistical Models. EAS Publications Series, 2013, vol. 59